# DEMANDE DE BREVET EUROPEEN

(11) **EP 2 141 412 A1**
(43) Date de publication de la demande: **06.01.2010**
(21) Numéro de dépôt: 08011932.4
(22) Date de dépôt: 02.07.2008
(51) Int. Cl.: F23D 14/22, F23D 14/32, F23D 14/66

(54) **Oxy-brûleur à combustion étagée**

(71) Demandeur: L'Air Liquide Société Anonyme pour l'Etude et l'Exploitation des Procédés Georges Claude, 75007 Paris (FR)
(72) Inventeur: Douxchamps, Oliver, 6040 Jumet (BE); Behen, Johan, 6040 Jumet (BE); Behen, Johan, 6040 Jumet (BE); Constantin, M. Gabriel, 78530 Buc (FR); Tsiava, Rémi, 91250 Saint Germain-Les-Corbeil (FR); Grand, Benoit, 78000 Versailles (FR); Amirat, Mohand, 28320 Gas (FR)
(74) Mandataire: De Vleeschauwer, Natalie Y.L.D.

(57) **Abrégé**

La présente invention concerne un oxy-brûleur à combustion étagée avec injection d'oxydant primaire conjointement avec le combustible et injection d'oxydant secondaire espacée de l'injection du combustible, l'oxydant primaire ayant une température à l'entrée du passage de combustible inférieure à 100°C et l'oxydant secondaire ayant une teneur en oxygène d'au moins 80% vol. et une température à l'entrée de son passage d'injection supérieure à 100°C.

## Description

La présente invention concerne des oxy-brûleurs à combustion étagée fonctionnant avec un oxydant porté à température élevée et des combustibles à l'état gazeux ou liquide, ainsi que leur mise en oeuvre. Des brûleurs de ce type sont destinés en particulier, mais de façon non exclusive, à une utilisation dans les fours industriels.

Le mode de combustion utilisant de l'oxygène ou un gaz riche en oxygène (au moins 80 %vol d'oxygène) est dit "oxy-combustion".

L'oxy-combustion comparée à l'aéro-combustion, utilisant donc de l'air, permet un gain énergétique au moins pour la raison que l'énergie thermique des gaz de combustion n'est pas absorbée en partie par l'azote de l'air. Dans les fours traditionnels, même si une partie de l'énergie entraînée avec l'azote est récupérée, les fumées finalement évacuées, comprenant l'azote, en entraînent encore une part significative.

La réduction de la consommation énergétique par unité de production considérée présente l'avantage supplémentaire de limiter les émissions de dioxyde de carbone, et donc de favoriser le respect des exigences règlementaires dans ce domaine.

La présence d'azote est par ailleurs source de formation d'oxydes dits NOx, dont l'émission est pratiquement interdite en raison des dommages liés à la présence de ces composés dans l'atmosphère.

Dans la pratique les utilisateurs se sont efforcés de faire fonctionner les fours opérant avec de l'air dans les conditions conduisant à des émissions aussi limitées que possible. A ce fin, il est souvent nécessaire de procéder à une dépollution coûteuse des fumées par l'usage de catalyseurs.

En dépit des avantages énoncés ci-dessus, l'utilisation de l'oxy-combustion, notamment dans les fours industriels, reste à développer. Les raisons sont de plusieurs natures. Un frein réside dans le coût de l'oxygène. Celui-ci est en principe compensé par les économies réalisées par ailleurs. Il entre néanmoins en ligne de compte dans la mesure où s'ajoutent les investissements en matériel spécifiques pour l'utilisation de l'oxygène.

Le bilan économique de la mise en oeuvre de l'oxy-combustion n'est positif que dans la mesure où l'on optimise les conditions de mise en oeuvre. Pour ce qui concerne le rendement énergétique, l'utilisation d'oxygène ou d'un gaz riche en oxygène à température élevée, à savoir une température d'au moins 100°C, voire de plusieurs centaines de degrés, est indiquée ou même nécessaire.

Accessoirement il est aussi utile de procéder dans une certaine mesure au chauffage préalable du combustible et à celui des matières premières traitées dans le four.

Le chauffage préalable de l'oxygène et son utilisation constituent des opérations délicates. Les difficultés soulevées viennent notamment du caractère extrêmement corrosif de l'oxygène chaud pour les matériaux utilisés à son contact, notamment pour les alliages métalliques.

Si les inventeurs dans une demande antérieure non-publiée (demande européenne 07.107.942 déposée le 10 mai 2007) ont proposé des échangeurs thermiques permettant de chauffer l'oxygène de façon satisfaisante, l'utilisation de cet oxygène chaud pose également des problèmes spécifiques dans la conduite des fours.

Certains fours industriels sont construits de manière à fonctionner sans interruption pendant des périodes dépassant la dizaine d'années. Cette durée de vie est déterminée principalement par l'usure des réfractaires qui en constituent les parois.

Pendant ces très longues durées, les autres éléments du four et notamment les bruleurs doivent conserver au maximum leurs performances initiales. Deux causes principales sont susceptibles de modifier leurs caractéristiques. D'une part la circulation des gaz chauds, notamment de l'oxygène, conduit à l'usure des moyens d'injection. D'autre part les combustibles soumis à de très hautes températures dans les canalisations proches de la zone de combustion, peuvent conduire à des dépôts qui perturbent le flux de ces combustibles. Ce dernier effet est sensible notamment lors de l'utilisation de fuels lourds lorsque ceux-ci sont exposés à des températures dépassant par exemple 180°C. Mais à un degré moindre, la dégradation des combustibles gazeux peut aussi se produire, même si elle n'intervient de manière significative que pour des températures dépassant les 600°C.

Quels que soient les combustibles choisis, la maintenance des moyens d'injection des combustibles doit intervenir de manière régulière tout au long de la vie du four.

Les opérations de maintenance doivent être conduites sans interrompre le fonctionnement du four. Une difficulté est de concevoir les brûleurs et les moyens d'alimentation qui leur sont associés de telle sorte que ces opérations soient réalisables dans des conditions relativement aisées et rapides. Les inventeurs se sont efforcés de proposer des moyens et les façons de mise en oeuvre de ceux-ci, permettant de répondre à cette question.

Les inventeurs ont tout d'abord constaté que l'acheminement de l'oxygène chaud ou du gaz chaud riche en oxygène impose l'utilisation de moyens spécifiques. Le caractère éminemment corrosif de l'oxygène chaud conduit à limiter sa circulation à des trajets aussi courts que possible. Il convient également d'éviter l'impact du flux d'oxygène/de gaz chaud riche en oxygène dans des canalisations présentant des courbures trop accentuées. Il est encore souhaitable d'éviter toute les irrégularités de surface sur le trajet de ce gaz. En particulier les raccords sont de préférence réalisés par soudure avec une surface polie de ces soudures.

Ces exigences, et d'autres encore, dans la conduite de l'oxygène chaud font que les moyens mis en oeuvre sont essentiellement fixes. Ces moyens ne se prêtent donc pas aux opérations de maintenance évoquées ci-dessus.

Pour tenir compte de ces difficultés, les inventeurs proposent de configurer les oxy-brûleurs de telle sorte que les moyens d'introduction des combustibles puissent être l'objet de ces opérations de maintenance, sans qu'il soit nécessaire d'intervenir sur ceux de l'oxygène/du gaz riche en oxygène chaud.

L'invention concerne plus particulièrement des oxy-bruleurs à combustion étagée et les procédés de combustion étagée au moyen desdits oxy-brûleurs tels que définis dans les revendications ci-jointes.

Le mode d'alimentation des oxy-brûleurs selon l'invention comprend de façon générale d'une part des moyens d'alimentation en combustible, moyens qui sont combinés avec une alimentation en oxydant essentiellement non chauffé, c'est-à-dire : ayant une température inférieure à 100°C, et d'autre part des moyens d'alimentation en oxydant chaud, c'est-à-dire ayant une température supérieure à 100°C, et riche en oxygène indépendants des premiers.

Pour conserver au système l'avantage du bilan énergétique inhérent à l'utilisation de l'oxydant chaud, la fraction d'oxydant non chauffé doit rester aussi faible que possible. Dans une disposition où le combustible et l'oxydant chaud sont introduits de façon distincte dans l'oxy-brûleur, autrement dit en des points séparés même si la distance reste modeste, il est nécessaire de prévoir une fraction de l'oxydant pour entretenir et stabiliser la flamme au niveau de l'injection du combustible. L'oxydant chaud injecté à distance de l'injection du combustible est également appelé ci-après « oxydant secondaire », l'oxydant injecté au niveau de l'injection du combustible étant appelé « oxydant primaire ». L'oxydant primaire injecté pour obtenir la combustion partielle qualifiée de "primaire" au niveau de l'injection du combustible, ne fourni qu'une très faible fraction de l'ensemble de l'oxygène nécessaire à la combustion totale du combustible. Cette fraction est de manière utile inférieure à 10% de l'ensemble de l'oxygène. Avantageusement cette proportion est comprise entre 1,5 et 7% de l'ensemble de l'oxygène nécessaire pour assurer la combustion complète du combustible.

On comprend que le bénéfice de l'utilisation de l'oxydant chaud ne soit pas sensiblement affecté par cette fraction très restreinte d'oxydant non chauffé.

Par non-chauffé, il faut entendre que l'oxydant se trouve dans les conditions de température essentiellement ambiantes qui règnent sur son trajet l'acheminant vers le four. Au passage des parois réfractaires du four sa température s'élève nécessairement. L'important est que les canalisations précédant cette introduction ne soient pas soumises à l'action de l'oxydant chaud. La température de l'oxydant non chauffé est de préférence la température ambiante et ne doit pas dépasser une centaine de degrés Celsius, la température au voisinage du four étant néanmoins sensiblement plus élevée que celle de l'atmosphère à distance du four.

L'oxydant primaire et l'oxydant secondaire peuvent avoir une composition identique ou différente. Quand l'oxydant primaire et l'oxydant secondaire ont une même composition, ils peuvent être fournis par une même source d'oxydant, telle que, par exemple, une unité de séparation des gaz de l'air, l'oxydant secondaire traversant, avant l'entrée du ou des passages d'oxydant secondaire, des moyens pour le préchauffage dudit oxydant secondaire, tels que notamment des échangeur de châleur, tandis que l'oxydant primaire ne traverse pas de moyens pour son préchauffage avant l'entrée du ou des passages de combustible par lequel l'oxydant primaire est injecté.

Si, en règle général, dans le brûleur suivant l'invention, l'oxydant primaire est injecté autour de la buse de combustible à travers d'une canalisation en substance annulaire, il est également envisageable d'injecter l'oxydant primaire avec le combustible à travers la buse de combustible à l'intérieur du au moins un passage de combustible.

L'introduction dans le four de la fraction d'oxydant non chauffé (oxydant primaire) doit se faire à proximité immédiate de celle du combustible, ou sous forme d'un jet commun de combustible et d'oxydant primaire. Pour éviter une réaction prématurée dans les canalisations, le combustible et l'oxydant chaud sont néanmoins acheminés dans des conduites distinctes jusqu'au point d'inflammation qui se situe à proximité de la paroi interne du four. Il est préférable que l'injecteur ou buse d'injection de combustible qui est montée à l'intérieur du au moins un passage de combustible se termine en une ouverture d'injection située sensiblement au niveau de la sortie dudit passage de combustible ou légèrement en retrait de celle-ci pour ne pas porter cette extrémité de l'injecteur ou buse à trop haute température, et éviter la formation de dépôts par craquage du combustible et/ou la dégradation de l'extrémité des injecteurs.

Comme indiqué ci-dessus l'essentiel de l'alimentation en oxygène est faite en oxydant chaud. Les alliages les plus résistants connus (présentés dans la demande citée plus haut) permettent de véhiculer de l'oxygène ou du gaz riche en oxygène à 550°C ou au mieux à 600°C et à l'extrême à 650°C, sans encourir de dommages même sur de longues périodes. Les températures de l'oxydant utilisé ne dépassent pas les limites imposées par les matériaux, et peuvent se situer notamment entre 350 et 550°C.

L'admission de l'oxydant chaud peut se faire dans le voisinage de l'introduction du combustible dans la mesure où les canalisations demeurent distinctes, afin de pouvoir intervenir sur celles de combustible sans toucher à celles d'oxydant chaud.

Néanmoins il est préférable selon l'invention de disposer les points d'introduction de l'oxydant chaud de façon à favoriser le développement d'une flamme dans laquelle la combustion se fait de façon progressive sur le trajet de cette flamme. Cette technique est connue dans son principe. Elle est généralement désignée sous le nom de "combustion étagée".

Le but de la combustion étagée est de limiter la température la plus élevée atteinte dans la flamme, en distribuant la combustion sur la longueur de celle-ci par l'apport progressif d'oxygène. Un tel apport progressif est obtenu notamment en effectuant l'introduction de l'oxydant dans le four au moins partiellement à distance de l'injection du combustible. De la sorte les flux gazeux se rencontrent après avoir progressé à l'intérieur du four, à distance de la paroi sur laquelle se trouve l'oxy-brûleur.

Pour favoriser encore la progressivité de la flamme, il est avantageux d'introduire l'oxydant chaud à partir de plusieurs points de plus en plus distants de celui d'injection du combustible.

Pour tenir compte de l'expansion du flux gazeux au cours de sa progression dans la flamme, expansion qui tient compte de l'expansion naturelle du jet émis et de l'élévation de température, les quantités d'oxydant mises en oeuvre sont avantageusement d'autant plus importantes qu'elles pénètrent dans ce flux plus en aval dans la flamme.

Pour des raisons d'ordre pratique, les points d'admission d'oxydant sont nécessairement en petit nombre. Ils sont avantageusement disposés de façon symétrique par rapport au point d'introduction du combustible de telle sorte que la flamme se développe également de manière symétrique.

Avantageusement le nombre d'admissions d'oxydant chaud de part et d'autre du point d'introduction du combustible ne dépasse pas 3 et de préférence est égal à deux.

Les proportions d'oxydant introduites comme indiqué sont avantageusement plus importantes en s'éloignant du point d'introduction du combustible. Partant de cette condition, le rapport des quantités introduites en deux points consécutifs dont la distance au point d'introduction du combustible va croissant, est de préférence Qₙ/Qₙ₊₁<1, et avantageusement tel que 0,2<Qₙ/Qₙ₊₁<0,6.

Sur un même oxy-brûleur le réglage des quantités d'oxydant chaud est obtenu de préférence sans interposer des éléments tels que des vannes dont les organes sont susceptibles d'être rapidement corrodés. De préférence les proportions distribuées sont déterminées par des ajutages de dimensions appropriées disposées en amont de l'introduction dans l'oxy-brûleur, et en aval de l'échangeur thermique dans lequel l'oxydant est chauffé.

Dans les interventions d'entretien des injecteurs de combustible présentées ci-dessus, il va de soi, que l'injecteur unique de combustible étant arrêté momentanément, tout le brûleur est interrompu. Les canalisations d'injection du combustible sont extraites de l'oxy-brûleur pour remise en état. Les conduits associés pour l'oxydant froid sont retirés simultanément. Cette opération ne pose en principe pas de difficulté dans la mesure où les tubes en question sont raccordés aux installations en amont par des moyens (raccords, joints...) que l'absence d'une corrosion excessive par les produits véhiculés permet de réaliser dans des matériaux et suivant des structures traditionnelles. Le démontage de ces éléments est d'origine prévu pour se prêter à ces travaux de maintenance.

La disposition d'un oxy-brûleur comportant une seule injection de combustible, nécessite cependant l'interruption du brûleur. Cette interruption ne compromet pas le fonctionnement du four lorsque celui-ci comporte un nombre élevé d'oxy-brûleurs, et que l'apport énergétique interrompu, qui ne représente qu'une fraction de l'ensemble, peut même le cas échéant être compensé par l'accroissement momentané du régime des brûleurs voisins. La distribution énergétique est alors seulement légèrement déplacée dans l'espace du four.

Si néanmoins on veut encore minimiser cette modification de la distribution spatiale, il est possible d'utiliser des oxy-brûleurs comportant plus d'un point d'injection du combustible, et notamment deux points.

Le fonctionnement de ces oxy-brûleurs suit globalement le processus décrit ci-dessus à propos des oxy-brûleurs ne comportant qu'un seul point d'introduction. En régime normal les deux injecteurs sont alors avantageusement en fonctionnement simultané et de préférence concourent chacun pour moitié à l'apport de combustible. Lors des opérations d'entretien, l'un des injecteurs peut être interrompu l'autre restant en fonctionnement et son régime étant éventuellement modifié pour compenser tout ou partie de l'apport de l'injecteur interrompu. Une fois le premier injecteur remis en état, le processus est répété sur le second. Dans ces conditions l'oxy-brûleur peut délivrer une puissance qui est peu, ou pas modifiée par rapport à celle correspondant au fonctionnement ordinaire.

Dans la proposition précédente les introductions de combustible sont destinées au même combustible. Il est possible par ailleurs de disposer sur le même oxy-brûleur deux ou plus, amenées de combustible pour différents types de combustibles, notamment des combustibles gazeux d'une part et des combustibles liquides comme les fuels lourds, d'autre part.

L'intérêt que présentent les oxy-brûleurs susceptibles de fonctionner avec différents types de combustibles est d'abord lié aux qualités de ces combustibles.

Toujours pour l'utilisation des combustibles liquides, comme les fuels lourds, il faut tenir compte des conditions d'atomisation de ces combustibles. Si en principe la pulvérisation du liquide peut être obtenue par des moyens purement mécaniques, le plus usuel est cependant de procéder au moyen d'un gaz de propulsion (air, vapeur d'eau, gaz naturel, oxygène...). Le volume de ce dernier est sans commune mesure avec celui de l'oxygène primaire, et en principe est de peu d'importance dans les mécanismes de combustion. Ce gaz n'est cependant pas entièrement indifférent. En particulier si on utilise communément de l'air sous pression, on enrichit l'atmosphère de la flamme en azote et par suite on accroît le risque de formation de NOx. L'utilisation de vapeur d'eau ne présente pas cet inconvénient mais la capacité calorifique de l'eau est élevée, ce qui accroît un peu la consommation énergétique.

Des considérations d'ordre économique interviennent aussi dans le choix du combustible. D'une part les prix respectifs, notamment du gaz et du fuel lourd, sont sujets à des variations sensibles dans le temps. Mais d'autre part et surtout, le coût de l'approvisionnement en gaz dépend pour partie des conditions négociées avec les fournisseurs. Ces derniers consentent des tarifs avantageux lorsque la fourniture est assortie de modalités suspensives pour tenir compte notamment des variations importantes de la demande. Selon ces modalités la fourniture peut être interrompue momentanément. Pour bénéficier de ces conditions sans pour autant interrompre la production il est donc nécessaire de pouvoir passer d'un combustible à un autre pratiquement instantanément. Pour cela il est nécessaire de disposer de oxy-brûleurs susceptibles de travailler avec ces divers combustibles.

L'invention propose aussi les oxy-brûleurs correspondant aux dispositions énoncées précédemment ainsi que des moyens associés à ces oxy-brûleurs lesquels sont présentés dans la suite de la description en se reportant aux figures annexées, avec des détails complémentaires sur leur mise en oeuvre. Pour ces figures :
- la figure 1a est une vue schématique en coupe d'un oxy-brûleur utilisé selon l'invention ;
- la figure 1b représente en vue de face l'oxy-brûleur de la figure 1a;
- la figure 2a est une vue analogue à celle de la figure 1a, l'oxy-brûleur comprenant deux alimentations en combustible ;
- la figure 2b est une vue de face de l'oxy-brûleur de la figure 2a ;
- la figure 3 est une vue de l'oxy-brûleur de la figure 1a, présentant en partie les alimentations de l'oxy-brûleur ;
- la figure 4 est analogue à la précédente, et concerne l'oxy-brûleur de la figure 2a ;
- la figure 5 présente schématiquement un type de circuit d'alimentation en oxygène chaud d'un côté d'un four muni d'oxy-brûleurs.

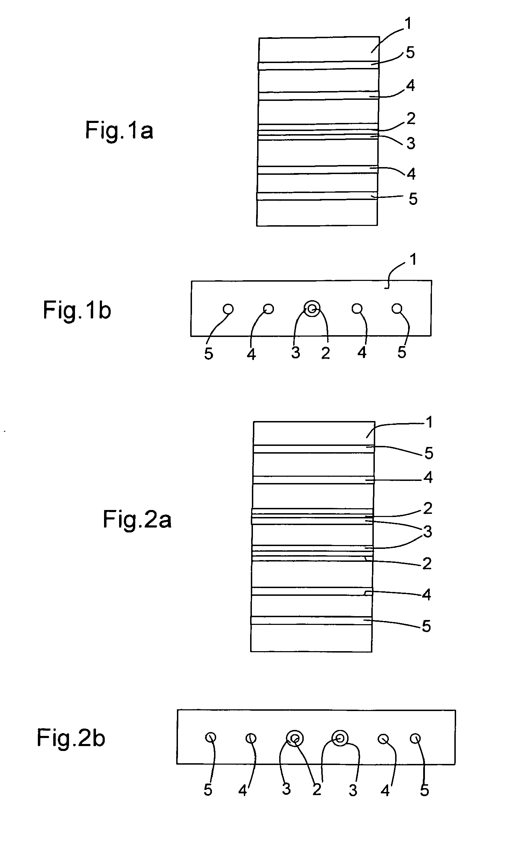

L'oxy-brûleur de la figure 1a comprend un bloc réfractaire 1 qui entre dans la constitution de la paroi du four. Ce bloc est avantageusement constitué de plusieurs parties assemblées les unes aux autres par une armature non représentée, située du côté extérieur par rapport au four. Le bloc réfractaire est traversé de plusieurs canalisations qui débouchent sur la face interne du four et qui permettent l'introduction du combustible et de l'oxydant.

La disposition des différentes canalisations d'alimentation est fonction du régime de combustion recherché d'une part, et de la forme générale de la flamme d'autre part.

Dans les fours fonctionnant en oxy-combustion, un avantage substantiel réside dans l'absence d'azote qui à très haute température conduit à la formation d'oxydes NOx. Néanmoins les grands fours industriels ne peuvent être parfaitement étanches à l'atmosphère extérieure. Il pénètre toujours un peu d'air, et donc d'azote, même si l'on s'efforce de maintenir une certaine étanchéité notamment de façon dynamique.

La présence même résiduelle d'azote peut conduire à la présence en quantité réduite de NOx. Les taux de ces polluants devant être aussi faibles que possible, il est avantageux de régler le régime du four fonctionnant en oxy-combustion de manière à minimiser encore leur formation.

Il est connu que la formation des oxydes d'azote est favorisée par les températures les plus élevées atteintes dans les flammes. La mise en oeuvre d'oxy-brûleurs selon l'invention vise donc, pour une même puissance développée, à limiter les températures les plus hautes localement présentes dans les flammes.

Une technique pour limiter les températures consiste à faire en sorte que le combustible soit progressivement mis en contact avec le comburant. Le régime est qualifié habituellement de "combustion étagée".

Pour obtenir le régime de combustion étagée, une faible proportion de l'oxydant est introduite conjointement au combustible de telle sorte que la flamme soit stabilisée au point d'injection. Mais cette quantité d'oxygène doit rester faible pour ne pas concentrer une part trop importante de l'énergie de combustion sous un faible volume et accroître la température de la flamme.

Au-delà du point d'injection, la flamme se trouve successivement alimentée en oxygène par le mélange de cette flamme primaire avec les jets d'oxydant émis à partir des buses d'injection situées sur la paroi à une certaine distance de la buse d'injection du combustible et de l'oxydant primaire. Ces alimentations secondaires sont disposées en fonction des caractéristiques des flux gazeux (débit, vitesse d'émission, température), de l'expansion de ceux-ci et de la longueur de la flamme recherchée.

Dans la représentation des figures 1a et 1b, l'alimentation en combustible est schématisée par la conduite 2. Cette conduite est concentrique à la conduite 3 amenant l'oxygène primaire. L'ensemble est disposé au centre du oxy-brûleur.

De part et d'autre de l'alimentation primaire deux alimentations d'oxydant "secondaires" 4 et 5 complètent l'apport d'oxygène nécessaire pour assurer la combustion complète du combustible injecté en 2. L'alimentation d'oxydant secondaire 5 est couramment également appelée « alimentation tertiaire », car plus espacée de l'injection de combustible que la première alimentation d'oxydant secondaire 4.

La mise en oeuvre de ce type d'oxy-brûleur peut avantageusement suivre les prescriptions énoncées dans les publications WO 02/081967A et WO 2004/094902A, tant pour ce qui concerne la distribution spatiale des injections, que pour les quantités respectives de combustible et d'oxydant utilisées.

La répartition de l'oxydant sur les canalisations est avantageusement telle que la quantité croît avec la distance qui sépare son point d'injection de celui du combustible. Dans la forme présentée aux figures 1a et 1b, les alimentations par les conduites 4 sont avantageusement moins importantes que celles effectuées à partir des canalisations 5.

A titre indicatif le rapport de l'alimentation respective par les canalisations 4 (Q₁) et 5 (Q₂) est par exemple compris entre 0,2 et 0,6.

Pour obtenir une flamme dont la forme d'ensemble est sensiblement plane les axes des différentes canalisations sont avantageusement disposés dans un même plan. Une flamme plane permet d'exposer directement une plus grande surface au rayonnement issu de la flamme, ou indirectement celui des réfractaires exposés à cette flamme, notamment ceux de la voûte du four.

La disposition des injections peut être sensiblement différente lorsque la forme de la flamme n'est pas commandée par un échange thermique avec une surface plane. Les alimentations peuvent notamment être disposées de façon concentrique autour du point d'injection d'oxydant primaire.

Les oxy-brûleurs schématisés aux figures 2a et 2b reprennent la structure générale précédente. Ils s'en distinguent par la présence de deux alimentations en combustible 2 et en oxydant primaire 3.

La disposition de deux injections qui peuvent être aussi proches l'une de l'autre que les conditions d'encombrement le permettent, est destinée à faciliter les opérations de maintenance. Plus les injections sont proches, plus le mode de fonctionnement s'apparente à celui dans lequel une seule alimentation primaire est aménagée.

Le fonctionnement des oxy-brûleurs, quelles que soient les précautions prises, peut conduire à un encrassement par les produits de décomposition des combustibles. Pour minimiser ce risque, les extrémités des buses sont avantageusement en léger retrait par rapport à la paroi interne de du four. Ce retrait est aussi motivé par le souci de protection de l'extrémité de la canne d'injection. En procédant de cette façon, la température est sensiblement inférieure à celle régnant dans le four notamment du fait de la circulation même du combustible et de celle de l'oxydant "froid". A noter que même si le combustible est préchauffé pour accroître le rendement énergétique, les températures atteintes sont limitées pour ne pas risquer la décomposition thermique dans les canalisations d'alimentation.

Les opérations de maintenance doivent s'effectuer sur le four sans en interrompre le fonctionnement. Il est nécessaire de s'assurer que ces opérations ne modifient pratiquement pas le régime de fonctionnement. L'arrêt d'un oxy-brûleur sur les grands fours qui en comportent habituellement au moins 6 et 12, peut être compensé momentanément par un accroissement correspondant du régime des oxy-brûleurs voisins. Il en résulte néanmoins une modification de l'équilibre général de la courbe de feu, et peut être aussi de la circulation des fumées lesquelles sont utilisées comme indiqué plus loin dans le cycle de chauffage de l'oxygène.

Une solution alternative pour minimiser les influences des opérations de maintenance réside par exemple dans l'utilisation d'oxy-brûleurs comportant deux injections de combustible. Avantageusement, les deux injections sont alors utilisées simultanément. Dans la nécessité de procéder à une maintenance, un de ces moyens d'injection est momentanément interrompu. Eventuellement la seconde injection prend le relais d'une partie ou de la totalité de l'alimentation correspondant à celle de l'injecteur à l'arrêt.

Cette façon de procéder maintient de manière presque identique la distribution spatiale de l'énergie dans le four.

Lorsque le premier injecteur est replacé, le second peut être à son tour l'objet de la maintenance.

Dans ces opérations de maintenance, le plus usuel consiste à retirer la lance d'injection du combustible du bloc réfractaire par lequel elle pénètre dans le four. L'ouverture dégagée est obstruée momentanément pour prévenir la pénétration d'air.

Les alimentations en combustible ne nécessitent pas de façon générale, des canalisations offrant des caractéristiques particulières de résistance à la corrosion. Les matériaux usuels comme les aciers inoxydables traditionnels suffisent, et surtout ces canalisations peuvent supporter des raccords, des vannes et autres éléments susceptibles d'être démontés à l'occasion de ces opérations de maintenance.

La dépose de ces canalisations ne soulève pas de grands problèmes. La question ne se pose pas d'avantage lorsque l'oxydant primaire est injecté avec le combustible à une température relativement basse, par exemple à une température ne dépassant pas 100°C.

Pour porter le rendement énergétique des oxy-brûleurs au plus haut niveau, il est avantageux d'utiliser de l'oxydant préchauffé à des températures qui peuvent atteindre ou dépasser 550°C. Dans ces conditions, les conduits de l'oxygène ou du gaz riche en oxygène doivent présenter des qualités de résistance très particulières et il faut dans toute la mesure du possible éviter ou réduire le plus possible les soudures ou les éléments de raccord. Pour cette raison les canalisations d'amenée de l'oxygène chaud sont dans l'ensemble maintenues en place lors des opérations de maintenance.

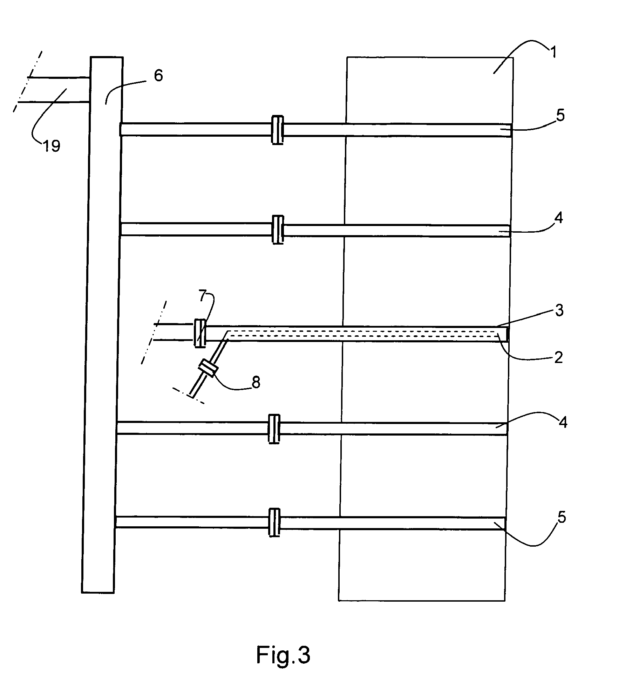

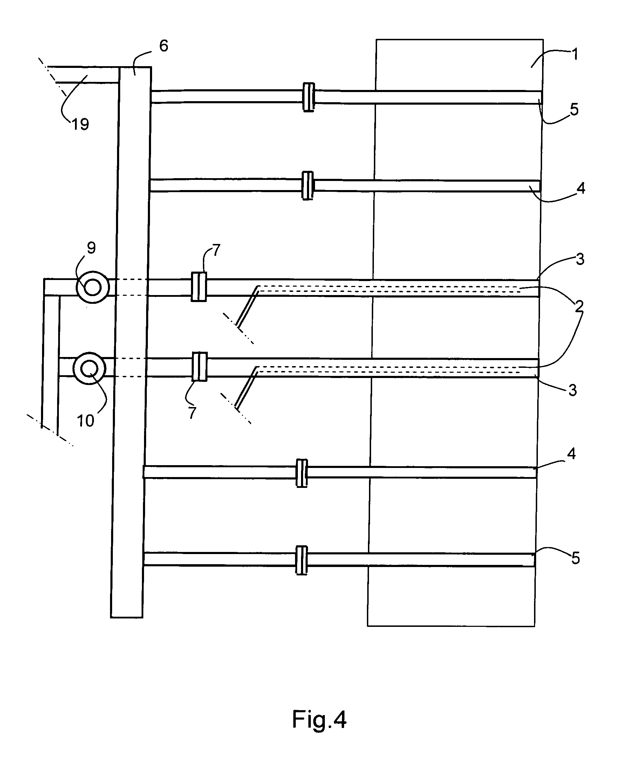

Les figures 3 et 4 reprennent les éléments des oxy-brûleurs des figures 1 et 2, en y intégrant des éléments supplémentaires d'alimentation en oxydant chaud.

Pour l'alimentation en oxydant chaud, les canalisations 4 et 5 sont raccordées à une nourrice 6. Entre la nourrice 6 et l'oxy-brûleur on évite la présence de vanne. La distance entre la nourrice et l'oxy-brûleur est par ailleurs aussi courte que le permet l'encombrement à proximité du four.

Les canalisations représentées droites peuvent présenter des courbures. Il est préférable que ces courbures soient aussi peu accentuées que possible, pour minimiser l'impact de l'oxygène chaud sur leurs parois, qui, à terme, est susceptible d'entraîner leur érosion.

La quantité d'oxygène répartie sur chaque canalisation est déterminée de façon permanente par les dimensions d'ajutages localisés soit sur les canalisations soit à la jonction des canalisations 4 et 5 avec la nourrice 6.

La nourrice est pour sa part alimentée par une canalisation 19, laquelle est raccordée à un échangeur thermique, non-représenté sur ces figures, échangeur dans lequel l'oxydant est chauffé. Faute de pouvoir interposer des vannes sur le trajet de l'oxygène ou du gaz riche en oxygène chaud, les modifications du régime se commandent à partir de l'oxydant froid introduit dans l'échangeur. Ces modifications sont nécessairement limitées.

Les alimentations en combustible et oxydant froid représentées aux figures 3 et 4 sont constituées de la canalisation 3. Cette canalisation 3 enveloppe la canalisation de combustible 2. Ces deux canalisations peuvent être désolidarisées de leur circuit d'alimentation respectif, au niveau des brides 7 et 8. Une fois ces brides défaites les canalisations 2 et 3 peuvent être extraites du réfractaire pour procéder à leur remise en état.

Les figures 2 et 3 montrent de façon schématique l'agencement qui peut être celui dans lequel le combustible passant dans la canalisation centrale 2 est gazeux. Lorsque le combustible est liquide, son introduction requiert l'utilisation de moyens permettant l'atomisation de ce liquide. En particulier lorsque l'atomisation est effectuée au moyen d'un gaz (vapeur, air...) la canalisation d'amenée du combustible doit encore comprendre une conduite d'amenée de ce gaz d'atomisation jusqu'à proximité de l'injection.

Comme représenté à la figure 4, l'alimentation en oxydant "froid" par les canalisations 3, peut être régulée séparément par exemple au moyen des vannes 9 et 10.

Comme proposé dans la demande européenne non publiée n°07 107 942, déposée le 10/05/07 il est préférable, toujours pour minimiser les difficultés liées au transport de l'oxygène chaud, de disposer l'échangeur thermique dans lequel l'oxygène est chauffé le plus près possible de l'oxy-brûleur. Pour les mêmes raisons le nombre d'oxy-brûleurs alimentés à partir d'un échangeur est limité. De préférence chaque échangeur n'alimente pas plus de deux oxy-brûleurs, et de façon particulièrement préférée chaque échangeur n'est relié qu'à un oxy-brûleur. De cette façon le débit d'oxydant et donc d'oxygène peut être réglé pour chaque oxy-brûleur indépendamment des autres oxy-brûleurs, et le réglage peut être effectué sur l'oxydant avant qu'il ne passe dans l'échangeur thermique.

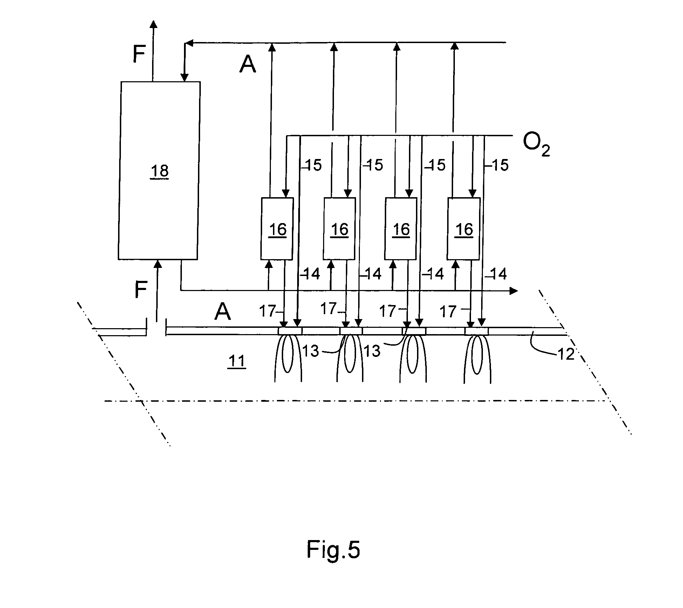

La figure 5 montre de façon schématique un ensemble d'alimentation en oxydant d'un four.

Le four 11est représenté partiellement en vue de dessus. Sa paroi réfractaire latérale 12, porte une série d'oxy-brûleurs schématisés 13 insérés dans la paroi. Chaque oxy-brûleur 13 est alimenté de deux façons en oxydant. Une première série de conduites 14 achemine de l'oxydant froid comme précisé précédemment, pour alimenter la combustion primaire. Une seconde série de conduites 15, alimente les échangeurs de chaleur 16. A la sortie de ces échangeurs l'oxydant chaud est transporté jusqu'aux oxy-brûleurs par des canalisations 17 représentant globalement les différentes alimentations en oxydant chaud de chaque oxy-brûleur.

Dans le schéma de la figure 5, les échangeurs thermiques 16 font circuler à contre courant de l'oxydant un fluide caloporteur préalablement chauffé. Dans le mode présenté le chauffage de ce fluide caloporteur est conduit dans un récupérateur 18 dans lequel circulent les fumées F sortant du four 11.

Si en principe il est possible de procéder à un échange de chaleur directement entre les fumées et les produits à préchauffer, le souci de procéder dans les meilleures conditions d'efficacité et de sécurité conduit à des installations d'échange plus complexes et notamment par l'utilisation du fluide caloporteur intermédiaire.

Dans un premier "récupérateur" 18 les fumées réchauffent le fluide intermédiaire, par exemple de l'air, de l'azote, du CO₂ ou tout fluide approprié lequel circule par exemple en boucle entre ce récupérateur et les échangeurs 16 dans lesquels il réchauffe l'oxydant. Une alternative pour le fluide intermédiaire comme de l'air, est de ne pas utiliser la boucle et de récupérer l'air chaud à la sortie des échangeurs secondaires par une chaudière ou un autre moyen de récupération d'énergie.

## Revendications

1. Oxy-brûleur à combustion étagée comprenant :
• au moins un passage d'injection de combustible ayant une entrée et une sortie et
• au moins un passage d'injection d'oxydant secondaire ayant une entrée et une sortie, la sortie du au moins un passage d'injection d'oxydant secondaire étant espacée de la sortie du au moins un passage d'injection de combustible,
• le au moins un passage d'injection d'oxydant secondaire étant relié à une source d'oxydant secondaire ayant une teneur en oxygène d'au moins 80%vol d'oxygène, de préférence d'au moins 90%vol et une température à l'entrée du au moins un passage d'injection d'oxydant secondaire supérieure à 100°C, de préférence supérieure à 200°C,
• le au moins un passage de combustible étant relié à une source de combustible et comportant une buse d'injection de combustible montée à l'intérieur du au moins un passage d'injection de combustible, ledit au moins un passage de combustible étant également relié à une source d'oxydant primaire pour l'injection dudit oxydant primaire conjointement avec le combustible à travers le au moins un passage de combustible, ledit oxydant primaire ayant une température à l'entrée du au moins un passage de combustible inférieure à 100°C.

2. Otcy-brûleur selon la revendication 1, dans lequel l'oxydant secondaire à une température à l'entrée du au moins un passage d'oxydant secondaire inférieure à 650°C, de préférence inférieure à 600°C et encore de préférence entre 350 et 550°C

3. Oxy-brûleur selon l'une des revendications précédentes, comprenant une pluralité de passages d'oxydant secondaire.

4. Oxy-brûleur selon la revendication 3, dans lequel les sorties de la pluralité de passages d'oxydant secondaire sont positionnées de manière en substance symétrique vis-à-vis le ou les sorties du au moins un passage de combustible.

5. Oxy-brûleur selon l'une des revendications 3 et 4, comportant des sorties de la pluralité de passages d'oxydant secondaire de plus en plus distant des sorties du au moins un passage de combustible.

6. Oxy-brûleur selon l'une des revendications 3 à 5, dans lequel les sorties de la pluralité de passages d'oxydant secondaire sont alignées de part et d'autre du ou des sorties du au moins un passage de combustible pour le développement d'une flamme en substance plane.

7. Oxy-brûleur selon la revendication 6, dans lequel le nombre de passages d'oxydant secondaire ayant une sortie de part et d'autre d'une sortie d'un passage de combustible ne dépasse pas 3 et de préférence est égal à 2.

8. Oxy-brûleur selon l'une des revendications précédentes comprenant une pluralité de passages de combustible, de préférence deux passages de combustible.

9. Oxy-brûleur suivant la revendication 8, dans lequel les sorties des passages de combustible sont disposées entre les sorties des passages d'oxydant secondaire.

10. Oxy-brûleur selon l'une des revendications précédentes, dans lequel l'oxydant primaire à une teneur en oxygène d'au moins 80%vol d'oxygène, de préférence d'au moins 90%vol.

11. Oxy-brûleur selon l'une des revendications précédentes, dans lequel le au moins un passage de combustible définie une canalisation en substance annulaire (3) autour de la buse de combustible (2), l'oxydant primaire étant injecté autour de la buse de combustible à travers ladite canalisation en substance annulaire.

12. Procédé d'oxycombustion étagée au moyen d'un oxy-brûleur suivant l'une quelconque des revendications précédentes.

13. Procédé d'oxycombustion suivant la revendication 12, dans lequel l'oxydant primaire fourni moins que 10,0% de l'oxygène fourni par l'ensemble de l'oxydant primaire et de l'oxydant secondaire, de préférence l'oxydant primaire fourni entre 1,5 et 7,5 % de l'oxygène fourni par l'ensemble de l'oxydant primaire et de l'oxydant secondaire.

14. Procédé d'oxycombustion étagée suivant l'une des revendications 12 et 13, dans lequel l'oxy-brûleur comporte plusieurs passages d'oxydant secondaires dont les sorties sont situées à des distances différentes du sortie du au moins un passage de combustible et dans lequel on injecte un débit plus élevé d'oxydant secondaire à travers le ou les passages d'oxydant secondaire dont la sortie est la plus éloignée de la sortie du au moins un passage de combustible.

15. Procédé d'oxycombustion suivant la revendication 14, dans lequel le rapport entre le débit Qₙ₊₁ plus élevé d'oxydant secondaire injecté à travers le ou un des passages d'oxydant secondaire dont la sortie est la plus éloignée de la sortie du au moins un passage de combustible est entre 5/3 et 5 fois le débit Qₙ d'oxydant secondaire injecté à travers le ou un des passages d'oxydant secondaire dont la sortie est moins éloignée de la sortie du au moins un passage de combustible.
